# EUROPÄISCHE PATENTANMELDUNG

(11) **EP 0 803 351 A1**
(43) Veröffentlichungstag der Anmeldung: **29.10.1997**
(21) Anmeldenummer: 97890077.7
(22) Anmeldetag: 25.04.1997
(51) Int. Cl.: B32B 27/12, B32B 23/08, B32B 31/00

(54) **Laminat bestehend aus einer Basis- und Deckschicht sowie Verfahren zur Herstellung einer Dekoroberfläche an diesem Laminat**

(30) Priorität: 25.04.1996 AT 753/96
(71) Anmelder: ISOVOLTA Österreichische Isolierstoffwerke Aktiengesellschaft, 2355 Wiener Neudorf (AT); ISOSPORT VERBUNDBAUTEILE Ges.m.b.H., A-7000 Eisenstadt (AT)
(72) Erfinder: Walter, Peter, Dipl.-Ing.-Dr., 2345 Brunn/Gebirge (AT); Bichler, Erwin, Ing., 6060 Hall (AT)
(74) Vertreter: Dungler, Karin

(57) **Zusammenfassung**

Die Erfindung betrifft ein Laminat bestehend aus einer Basis- und einer Deckschicht, welche mittels einer Kleberschicht verbunden sind, wobei die Basisschicht (2) aus einer oder mehreren Lage(n) von mit duroplastischem(n) Bindemittel(n) imprägnierten, faserhältigen Trägermaterial(ien) besteht, die Deckschicht (3) eine Thermoplastfolie oder ein Thermoplastfolienverbund und die Kleberschicht (4) eine heißsiegelfähige Kleberschicht sind. Dieses Laminat (1) weist vorzugsweise an seiner Deckschicht (3) ein nach dem Thermodiffusionsdruck- oder Siebdruckverfahren aufgebrachtes Dekor (7) auf, sodaß ein bedrucktes Laminat (6) entsteht.

## Beschreibung

Die Erfindung betrifft ein Laminat bestehend aus einer Basis- und einer Deckschicht, welche mittels einer Kleberschicht verbunden sind sowie ein Verfahren zur Herstellung einer Dekoroberfläche an diesem Laminat.

Nach den bekannten Verfahren zur Herstellung von Dekoroberflächen an Laminaten werden Thermoplastfolien mit dem gewünschten Dekor bedruckt und anschließend für die Ausbildung eines Verbundes mit einem Trägermaterial verklebt.

Da sich thermoplastische Materialien mitunter schlecht verkleben lassen, müssen die Herstellungsverfahren bei erhöhten Temperaturen durchgeführt werden, um die Ausbildung eines Verbundes bestehend aus dekorierter Thermoplastfolie und Trägermaterial zu gewährleisten. Da Thermoplaste jedoch bei erhöhten Temperaturen einer Materialschrumpfung unterliegen, muß entweder die Temperaturerhöhung durch aufwendige Regelungstechniken kontrolliert werden oder es müssen mehrere Lagen an Thermoplastfolien eingesetzt werden, um eine Mindeststärke zu gewährleisten; dies führt wiederum zu einer oft unerwünschten Gewichtserhöhung des endgefertigten, dekorierten Laminates.

Es hat sich nun gezeigt, daß beim Einsatz von Duroplasten die Laminatherstellung auch bei erhöhten Temperaturen durchgeführt werden kann, sodaß eine aufwendige Temperaturregelung nicht notwendig ist. Diese Laminate bestehen im wesentlichen aus faserhältigen Trägermaterialien, welche mit duroplastischen Bindemitteln imprägniert sind. Um eine Dekoroberfläche erzeugen zu können, werden Prepregs, beispielsweise Melaminharz-Prepregs, eingesetzt, welche als Trägermaterialien Dekorpapiere aufweisen. Diese können als Grunddekor eine Unifarbe haben, wobei die Farbpigmente bereits bei der Papierherstellung ein-bzw. aufgebracht werden. Ferner ist es möglich, das Grunddekor nach üblichen Druckverfahren wie beispielsweise dem Offsetdruckverfahren auf dem unimprägnierten Papier herzustellen. Durch Verpressen dieser Prepregs mit weiteren nicht-dekorierten Prepregs können Laminate mit einem Oberflächendekor erzeugt werden. Diese weisen jedoch den Nachteil auf, daß die Dekoroberfläche sehr spröde ist, sodaß es bei deren Weiterverwendung, beispielsweise als dekoratives Bauteil für die Innenausstattung von Wohn- oder Fahrzeugräumen sowie als dekoratives Skibauteil zu einer Beschädigung der Dekoroberfläche kommen kann. Um dies zu vermeiden, können transparente Deckschichten zum Schutz der Dekorschicht bei der Laminatherstellung mitverpreßt werden. Dadurch werden zwar mechanisch stabile, aber relativ dicke dekorierte Laminate mit hohem Eigengewicht erzeugt, deren Weiterverarbeitung mitunter arbeitsaufwendig ist.

Aufgabe der Erfindung ist es nun, dünne und relativ leichte Laminate mit Oberflächendekor bereitzustellen, welche gleichzeitig zufriedenstellende mechanische Eigenschaften aufweisen und mit einem für deren Weiterverarbeitung eingesetzten Trägermaterial gut verklebbar sind.

Erfindungsgemäß wird ein Laminat bestehend aus einer Basis- und einer Deckschicht, welche mittels einer Kleberschicht verbunden sind, vorgeschlagen, das dadurch gekennzeichnet ist, daß die Basisschicht aus einer oder mehreren Lage(n) von mit duroplastischem(n) Bindemittel(n) imprägnierten, faserhältigen Trägermaterial(ien) besteht, daß ferner die Deckschicht eine Thermoplastfolie oder ein Thermoplastfolienverbund und die Kleberschicht eine heißsiegelfähige Kleberschicht ist.

Ein weiterer Vorteil des erfindungsgemäßen Laminates besteht darin, daß das faserhältige Trägermaterial im wesentlichen aus Cellulosefasern besteht, wobei das Trägermaterial ein Dekorpapier mit einem Papiergewicht von 40 bis 250 g/m2 ist.

Ferner können die faserhältigen Trägermaterialien im wesentlichen Kunststoffasern, vorzugsweise Polyesterfasern, aufweisen.

Das erfindungsgemäße Laminat ist ferner dadurch gekennzeichnet, daß die Deckschicht ein nach dem Transferdruck- oder nach dem Siebdruckverfahren aufgebrachtes Dekor aufweist.

Weitere Vorteile des erfindungsgemäßen Laminates bestehen darin, daß die heißsiegelfähige Kleberschicht und die Deckschicht in Form eines coextrudierten Folienverbundes vorliegen, wobei die Deckschicht aus einer thermoplastischen Polyesterfolie, vorzugsweise einer Polyethylenterephthalatfolie und die heißsiegelfähige Kleberschicht aus einem Polyester mit einer Säurekomponente aus iso- und/oder tere-Phthalsäure bestehen.

Die Erfindung betrifft auch ein Verfahren zur Herstellung eines mit einem Dekor versehenen Laminates bestehend aus einer Basis- und einer Deckschicht, welche über eine Kleberschicht miteinander verbunden sind, wobei zur Ausbildung der Basisschicht in Form eines Halbfabrikates (Prepregs) eine oder mehrere Lagen eines faserhältigen Trägermaterials mit einem duroplastischen Bindemittel imprägniert werden, welches anschließend unter Trocknung in den B-Zustand übergeführt wird, daß diese als Halbfabrikat vorliegende Basisschicht mit einem coextrudierten Folienverbund bestehend aus der Deckschicht in Form einer Thermoplastfolie und der in Folienform vorliegenden heißsiegelfähigen Kleberschicht in einer beheizten Presse bei Preßoberflächentemperaturen von mehr als 100°C verpreßt wird, wobei sich die Basis- und die Deckschicht durch Plastifizierung der Kleberschicht zu einem Laminat verbinden und daß anschließend auf einer der Laminatoberflächen in einer weiteren beheizbaren Presse durch Umdruck von einem mit Thermodiffusionsfarbstoffen versehenen Trägermaterial ein Dekor erzeugt wird.

Ein weiteres Herstellungsverfahren ist dadurch gekennzeichnet, daß
a) zur Ausbildung des Dekors ein coextrudierter Folienverbund bestehend aus der Deckschicht in Form einer Thermoplastfolie und der in Folienform vorliegenden heißsiegelfähigen Kleberschicht in eine beheizte Presse geführt werden, in welcher durch Umdruck von einem mit Thermodiffusionsfarbstoffen versehenen Trägermaterial ein Dekor auf der Deckschicht erzeugt wird, daß
b) zur Ausbildung der Basisschicht in Form eines Halbfabrikates (Prepregs) eine oder mehrere Lagen eines faserhältigen Trägermaterials mit einem duroplastischen Bindemittel imprägniert wird/werden, welches anschließend unter Trocknung in den B-Zustand übergeführt wird, und daß
c) der gemäß a) dekorierte Folienverbund mit der gemäß b) hergestellten Basisschicht in Form eines Halbfabrikates in einer beheizten Presse bei Preßoberflächentemperaturen von mehr als 100°C verpreßt wird, wobei sich die Basis- und die Deckschicht durch Plastifizierung der Kleberschicht zu einem Laminat verbinden.

Ferner kann der Verfahrensschritt a) zur Ausbildung des Dekors derart abgeändert werden, daß ein coextrudierter Folienverbund bestehend aus der Deckschicht in Form einer Thermoplastfolie und der in Folienform vorliegenden heißsiegelfähigen Kleberschicht an seiner die Deckschicht aufweisenden Oberfläche mit Siebdruckfarben bedruckt wird.

Vorteilhafterweise können bei den genannten Verfahrensvarianten als faserhältiges Trägermaterial Cellulosefasern, vorzugsweise in Form eines Dekorpapieres mit einem Papiergewicht von 40 bis 250 g/m2 oder Kunststoffasern, vorzugsweise Polyesterfasern, eingesetzt werden.

Die erfindungsgemäßen Verfahrensvarianten weisen auch die Vorteile auf, daß als Deckschicht eine thermoplastische Polyesterfolie, vorzugsweise eine Polyethylenterephthalatfolie, und daß als heißsiegelfähige Kleberschicht ein Polyester mit einer Säurekomponente aus iso- und/ oder tere-Phthalsäure eingesetzt werden.

Ferner kann vorteilhafterweise zur Strukturierung der Deckschicht bei deren Verpressen mit der Basisschicht ein Matrizenblech auf deren Oberfläche angebracht werden, sodaß sich dessen Oberflächenstruktur in die Oberfläche der Deckschicht einprägt.

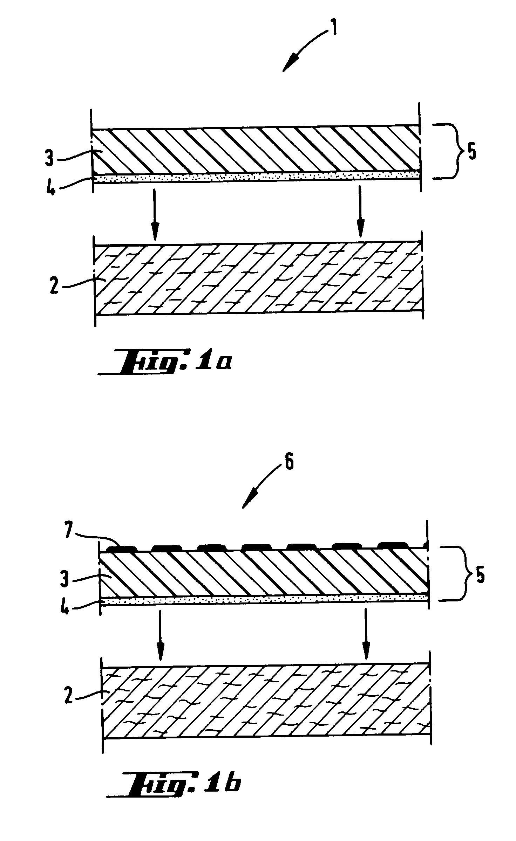

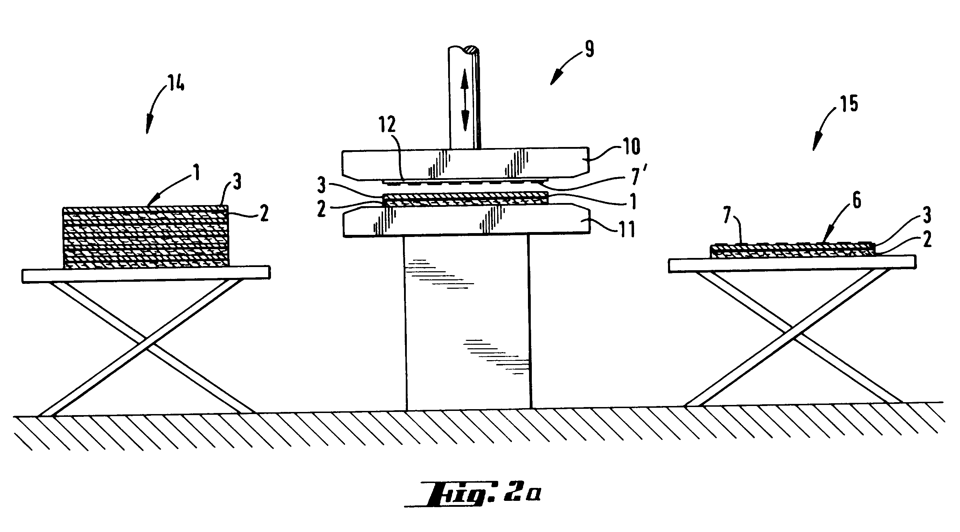

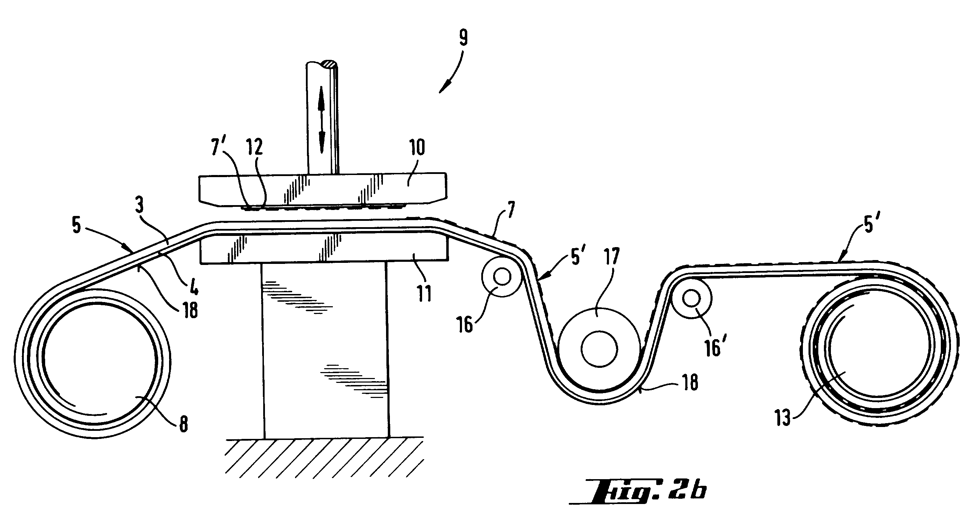

Die Erfindung wird anhand der Fig. 1a, 1b und 2a, 2b sowie anhand eines Ausführungsbeispiels näher erläutert.

Fig.1a zeigt in einer Explosionsdarstellung das Laminat 1 bestehend aus einer Basisschicht 2 und einer Deckschicht 3, wobei Basis- und Deckschicht mittels einer heißsiegelfähigen Kleberschicht 4 verbunden sind. Die Deckschicht 3 und die heißsiegelfähige Kleberschicht 4 können vorzugsweise in Form eines Folienverbundes 5 vorliegen.

Fig. 1b zeigt das mit dem Oberflächendekor 7 versehene Laminat 6, wobei der Laminataufbau dem gemäß Fig.1a entspricht.

Die Fig. 2a und 2b zeigen Verfahrensvarianten zur Herstellung des Oberflächendekors 7.

Gemäß Fig.2a wird das Laminat 1 an der Deckschicht 3 nach einem diskontinuierlich geführten Transferdruckverfahren mit dem Dekor 7 versehen, sodaß das an der Oberfläche dekorierte Laminat 6 gebildet wird.

Gemäß Fig.2b der Folienverbund 5 bestehend aus der Deckschicht 3 und der heißsiegelfähigen Kleberschicht 4 an der Oberfläche der Deckschicht 3 nach einem kontinuierlich geführten Transferdruckverfahren mit dem Dekor 7 versehen wird, sodaß der an der Oberfläche dekorierte Folienverbund 5' gebildet wird.

Die Erfindung wird nunmehr anhand des folgenden Ausführungsbeispiels sowie der Darstellung gemäß Fig.1a, 1b sowie der Fig.2a, 2b näher erläutert.

Dabei wird die Basisschicht 2 aus den Fig.1a und 1b derart hergestellt, daß ein faserhältiges Trägermaterial, welches beispielsweise ein Dekorpapier mit einem Gewicht von 175 g/m² sein kann, mit einem duroplastischen Bindemittel imprägniert wird. Als duroplastisches Bindemittel wird beispielsweise eine Epoxyharzmischung eingesetzt, welche aus einem Epoxyharz auf Basis eines Bisphenol-A-Diglycidyläthers, einem Anhydridhärter, einem Beschleuniger in Form eines Bortrifluoridkomplexes sowie Lösungsmitteln wie Methylethylketon besteht.

Der Imprägniervorgang des Dekorpapieres erfolgt durch horizontale Tauchimprägnierung (nicht dargestellt). Dabei wird das zu imprägnierende Dekorpapier mittels mehrerer Umlenkrollen in eine Tränkwanne, in welcher das duroplastische Imprägnierharz vorliegt, geführt. Durch Eintauchen des Trägermaterials erfolgt vorerst dessen Penetration und anschließend bei dessen Weiterführung durch das Harzbad die vollständige Imprägnierung. Das überschüssige Imprägnierharz wird anschließend mittels Dosiereinrichtungen von der Oberfläche des Dekorpapieres abgestreift. Die Lösungsmittel werden in einem nachgeschalteten Trockner und/oder einer Heizvorrichtung entfernt, wobei das Imprägnierharz in den B-Zustand übergeführt wird. Dadurch wird die Basisschicht 2 in Form eines Prepregs bereitgestellt. Dieses wird in die entsprechende Länge des herzustellenden Laminates abgelängt und zwischengelagert. Anschließend wird in einer Presse (nicht dargestellt) diese als Prepreg vorliegende Basisschicht 2 mit der als Folien vorliegenden, heißsiegelfähigen Kleberschicht 4 sowie der Deckschicht 3 verschlichtet. Vorzugsweise liegen die Deckschicht 3 und die heißsiegelfähige Kleberschicht 4 in Form eines coextrudierten Folienverbundes 5 vor. Der Preßstapel kann gegebenenfalls mit einem Matrizenblech in an sich bekannter Weise in eine Presse eingebracht und dort bei einem spezifisichen Druck von 20 bar und einer Temperatur von 50 - 170°C verpreßt werden. Durch diesen Preßvorgang (nicht dargestellt) wird die heißsiegelfähige Kleberschicht 4 plastifiziert, sodaß eine Verbindung zwischen der Deckschicht 3 und der Basisschicht 2 entsteht. Ferner werden die im B-Zustand befindlichen duroplastischen Bindemittel der Basisschicht 2 in den C-Zustand übergeführt, sodaß das Laminat 1, wie in der Explosionsdarstellung gemäß Fig.1a angeführt, erzeugt wird, dessen Oberfläche gegebenenfalls die dem Matrizenblech entsprechende Strukturierung aufweisen kann. Dieses Laminat 1 wird nunmehr auf einer Stapelvorrichtung 14, wie in Fig.2a dargestellt, gelagert und von dieser per Hand in die beheizbare Presse 9 eingebracht. In der beheizbaren Presse 9 wird das zu bedruckende Laminat 1 mit einem mit Thermodiffusionsfarbstoffen 7' versehenen Papier 12 stückweise per Hand verschlichtet. Die Länge des Papieres 12 richtet sich nach dem jeweiligen Verwendungszweck des endgefertigten, dekorierten Laminates; sie kann beispielsweise der üblichen Länge eines Skis entsprechen. Anschließend wird die Presse 9 geschlossen und auf etwa 190°C aufgeheizt. Die Verweilzeit des Laminates 1 in der Presse beträgt 30 - 210 sec. Der Preßdruck beträgt 80 - 85 bar. Durch die erhöhten Temperaturen in der beheizbaren Presse sublimieren die Thermodiffusionsfarbstoffe 7', sodaß - bewirkt durch den Anpreßdruck der Preßplatten 10 und 11 - der Umdruck des Dekors 7' vom Papier 12 auf das Laminat 1 erfolgt, sodaß das dekorierte Laminat 6 gemäß Fig. 1b gebildet wird, welches anschließend auf der Stapelvorrichtung 15 gelagert wird. Das endgefertigte Laminat 6 weist an seiner Deckschicht 3 das Dekor 7, welches durch das Umdruckverfahren gebildet worden ist, auf.

Gemäß der Verfahrensvariante nach Fig.2b kann ebenso ein coextrudierter Folienverbund 5, welcher aus der Deckschicht 3 sowie der heißsiegelfähigen Kleberschicht 4 besteht, eingesetzt werden. Für die Verfahrensdurchführung bei erhöhten Temperaturen ist die Kleberschicht 4 mittels einer Trennfolie 18 abgedeckt. Der Folienverbund 5 wird auf der Vorratsrolle 8 gelagert und kontinuierlich gemäß den Parametern aus dem in Fig.2a dargestellten Verfahren mit den auf dem Papierträger 12 vorliegenden Thermodiffusionsfarbstoffen 7' bedruckt, sodaß auf der Deckschicht 3 des Folienverbundes 5 das Dekor 7 erzeugt wird. Anschließend wird der dekorierte Folienverbund 5' über die Umlenkrolle 16 einer Kühlwalze 17 zugeführt. Die Kühlwalze 17 dient dazu, die in der beheizbaren Presse 9 großteils erweichte (plastifizierte) Kleberschicht 4 wieder in ihren wie am Verfahrensbeginn vorliegenden, nicht plastifizierten Zustand überzuführen. Anschließend wird der dekorierte Folienverbund 5' mittels der Umlenkrolle 16' der Vorratsrolle 13 zugeführt, wobei auf dieser Wegstrecke das Trennpapier 18 gegebenenfalls abgetrennt werden kann (nicht dargestellt).

Der dekorierte Folienverbund 5' kann nunmehr mittels der heißsiegelfähigen Kleberschicht 4 in an sich bekannter Weise auf Trägermaterialien wie beispielsweise Schichtpreßstoffe, Folien oder Folienverbunde aufgebracht werden und mit diesen unter Anwendung von erhöhtem Druck und erhöhter Temperatur zur Herstellung eines dekorativen Laminates verpreßt werden. Ferner kann der dekorierte Folienverbund 5' mit der Basisschicht 2, welche als Halbfabrikat (Prepreg) bestehend aus mit duroplastischen Bindemitteln imprägnierten faserhältigen Trägermaterialien vorliegt, verpreßt werden. Dabei erfolgt der Preßvorgang in einer beheizten Presse bei Temperaturen von mehr als 100°C, sodaß eine Plastifizierung der Kleberschicht 4 eintritt. Gleichzeitig erfolgt - bedingt durch den Anpreßdruck der Preßplatten - die Ausbildung eines Verbundes bestehend aus Basisschicht 2 und dekoriertem Folienverbund 5'. Während der Verweilzeit in der Presse, welche etwa 1 bis 5 Min. beträgt, erfolgt ebenso die Aushärtung der duroplastischen Bindemittel vom B-Zustand in den C-Zustand (nicht dargestellt).

Die gemäß Fig. 2a und 2b mit einem Dekor versehenen Laminate können für die Herstellung von dekorativen Skioberflächen oder für die Herstellung von dekorativen Bauteilen in der Innenraumausstattung von Wohn- oder Fahrzeugräumen verwendet werden.

## Patentansprüche

1. Laminat bestehend aus einer Basis- und einer Deckschicht, welche mittels einer Kleberschicht verbunden sind, dadurch gekennzeichnet, daß die Basisschicht aus einer oder mehreren Lage(n) von mit duroplastischem(n) Bindemittel(n) imprägnierten, faserhältigen Trägermaterial(ien) besteht, daß die Deckschicht eine Thermoplastfolie oder ein Thermoplastfolienverbund und daß die Kleberschicht eine heißsiegelfähige Kleberschicht ist.

2. Laminat nach Anspruch 1, dadurch gekennzeichnet, daß die faserhältigen Trägermaterialien im wesentlichen aus Cellulosefasern bestehen.

3. Laminat nach Anspruch 1, dadurch gekennzeichnet, daß das faserhältige Trägermaterial ein Dekorpapier mit einem Papiergewicht von 40 bis 250g/m2 ist.

4. Laminat nach Anspruch 1, dadurch gekennzeichnet, daß die faserhältigen Trägermaterialien im wesentlichen aus Kunststoffasern, vorzugsweise Polyesterfasern, bestehen.

5. Laminat nach einem der Ansprüche 1 bis 4, dadurch gekennzeichnet, daß die Deckschicht ein nach dem Transferdruckverfahren aufgebrachtes Dekor aufweist.

6. Laminat nach einem der Ansprüche 1 bis 4, dadurch gekennzeichnet, daß die Deckschicht ein nach dem Siebdruckverfahren aufgebrachtes Dekor aufweist.

7. Laminat nach einem der Ansprüche 1 bis 6, dadurch gekennzeichnet, daß die heißsiegelfähige Kleberschicht und die Deckschicht in Form eines coextrudierten Folienverbundes vorliegen.

8. Laminat nach einem der Ansprüche 1 bis 7, dadurch gekennzeichnet, daß die Deckschicht aus einer thermoplastischen Polyesterfolie, vorzugsweise einer Polyethylenterephthalatfolie besteht.

9. Laminat nach einem der Ansprüche 1 bis 8, dadurch gekennzeichnet, daß die heißsiegelfähige Kleberschicht aus einem Polyester mit einer Säurekomponente aus iso- und/oder tere-Phthalsäure besteht.

10. Verfahren zur Herstellung eines mit einem Dekor versehenen Laminates bestehend aus einer Basis- und einer Deckschicht, welche über eine Kleberschicht miteinander verbunden sind, dadurch gekennzeichnet, daß zur Ausbildung der Basisschicht in Form eines Halbfabrikates (Prepregs) eine oder mehrere Lagen eines faserhältigen Trägermaterials mit einem duroplastischen Bindemittel imprägniert werden, welches anschließend unter Trocknung in den B-Zustand übergeführt wird, daß diese als Halbfabrikat vorliegende Basisschicht mit einem coextrudierten Folienverbund bestehend aus der Deckschicht in Form einer Thermoplastfolie und der in Folienform vorliegenden heißsiegelfähigen Kleberschicht in einer beheizten Presse bei Preßoberflächentemperaturen von mehr als 100°C verpreßt wird, wobei sich die Basis- und die Deckschicht durch Plastifizierung der Kleberschicht zu einem Laminat verbinden und daß anschließend auf einer der Laminatoberflächen in einer weiteren beheizbaren Presse durch Umdruck von einem mit Thermodiffusionsfarbstoffen versehenen Trägermaterial ein Dekor erzeugt wird.

11. Verfahren zur Herstellung eines mit einem Dekor versehenen Laminates bestehend aus einer Basis- und einer Deckschicht, welche über eine Kleberschicht miteinander verbunden sind, dadurch gekennzeichnet, daß
a) zur Ausbildung des Dekors ein coextrudierter Folienverbund bestehend aus der Deckschicht in Form einer Thermoplastfolie und der in Folienform vorliegenden heißsiegelfähigen Kleberschicht in eine beheizte Presse geführt wird, in welcher durch Umdruck von einem mit Thermodiffusionsfarbstoffen versehenen Trägermaterial ein Dekor auf der Deckschicht erzeugt wird, daß
b) zur Ausbildung der Basisschicht in Form eines Halbfabrikates (Prepregs) eine oder mehrere Lagen eines faserhältigen Trägermaterials mit einem duroplastischen Bindemittel imprägniert wird/werden, welches anschließend unter Trocknung in den B-Zustand übergeführt wird, daß
c) der gemäß a) dekorierte Folienverbund mit der gemäß b) hergestellten Basisschicht in Form eines Halbfabrikates in einer beheizten Presse bei Preßoberflächentemperaturen von mehr als 100°C verpreßt wird, wobei sich die Basis- und die Deckschicht durch Plastifizierung der Kleberschicht zu einem Laminat verbinden.

12. Verfahren zur Herstellung eines mit einem Dekor versehenen Laminates bestehend aus einer Basis- und einer Deckschicht, welche über eine Kleberschicht miteinander verbunden sind, dadurch gekennzeichnet, daß
a) zur Ausbildung des Dekors ein coextrudierter Folienverbund bestehend aus der Deckschicht in Form einer Thermoplastfolie und der in Folienform vorliegenden heißsiegelfähigen Kleberschicht an seiner die Deckschicht aufweisenden Oberfläche mit Siebdruckfarben bedruckt wird, daß
b) zur Ausbildung der Basisschicht in Form eines Halbfabrikates (Prepregs) eine oder mehrere Lagen eines faserhältigen Trägermaterials mit einem duroplastischen Bindemittel imprägniert wird/werden, welches anschließend unter Trocknung in den B-Zustand übergeführt wird, daß
c) der gemäß a) dekorierte Folienverbund mit der gemäß b) hergestellten Basisschicht in Form eines Halbfabrikates in einer beheizten Presse bei Preßoberflächentemperaturen von mehr als 100°C verpreßt wird, wobei sich die Basis- und die Deckschicht durch Plastifizierung der Kleberschicht zu einem Laminat verbinden.

13. Verfahren nach einem der Ansprüche 10 bis 12, dadurch gekennzeichnet, daß als faserhältige Trägermaterialien im wesentlichen Cellulosefasern eingesetzt werden.

14. Verfahren nach Anspruch 13, dadurch gekennzeichnet, daß als faserhältiges Trägermaterial ein Dekorpapier mit einem Papiergewicht von 40 bis 250g/m2 eingesetzt wird.

15. Verfahren nach einem der Ansprüche 10 - 12, dadurch gekennzeichnet, daß als faserhältige Trägermaterialien im wesentlichen Kunststoffasern, vorzugsweise Polyesterfasern eingesetzt werden.

16. Verfahren nach einem der Ansprüche 10 bis 15, dadurch gekennzeichnet, daß die Deckschicht aus einer thermoplastischen Polyesterfolie, vorzugsweise einer Polyethylenterephthalatfolie gebildet wird.

17. Verfahren nach einem der Ansprüche 10 bis 16, dadurch gekennzeichnet, daß als heißsiegelfähige Kleberschicht ein Polyester mit einer Säurekomponente aus iso- und/oder tere-Phthalsäure eingesetzt wird.

18. Verfahren nach einem der Ansprüche 10 bis 17, dadurch gekennzeichnet, daß zur Strukturierung der Deckschicht bei deren Verpressen mit der Basisschicht ein Matrizenblech auf deren Oberfläche angebracht wird, sodaß sich dessen Oberflächenstruktur in die Oberfläche der Deckschicht einprägt.
